# FASCICULE DE BREVET EUROPEEN

(11) **EP 2 715 309 B1**
(45) Date de publication et mention de la délivrance du brevet: **05.08.2015**
(21) Numéro de dépôt: 12731098.5
(22) Date de dépôt: 01.06.2012
(51) Int. Cl.: G01N 1/08

(54) **DISPOSITIF DE PRELEVEMENT D'UN ECHANTILLON DE MATIERE SUR UN BLOC DE LADITE MATIERE**
VORRICHTUNG ZUR ENTNAHME EINER MATERIALPROBE AUS EINEM BLOCK AUS DIESEM MATERIAL
DEVICE FOR COLLECTING A SAMPLE OF MATERIAL FROM A BLOCK OF SAID MATERIAL

(30) Priorité: 03.06.2011 FR 1154858
(43) Date de publication de la demande: 09.04.2014
(73) Titulaire: Assistance Publique Hôpitaux De Paris, 75004 Paris (FR)
(72) Inventeur: DE TRAZEGNIES D'ITTRE, François, F-94800 Villejuif (FR)
(74) Mandataire: Lebkiri, Alexandre
(86) Numéro de dépôt international: PCT/FR2012/051231
(87) Numéro de publication internationale: WO 2012/172231

(56) Documents cités:
- DE-B1- 2 903 760
- DE-C1- 10 144 127
- US-A1- 2007 021 684
- US-B1- 6 652 807

## Description

### DOMAINE TECHNIQUE DE L'INVENTION

La présente invention concerne un dispositif de prélèvement d'un échantillon de matière sur un bloc de ladite matière, tel qu'un échantillon tissulaire sur un bloc histologique. Un tel prélèvement sert par exemple à effectuer des analyses ADN ou ARN.

### ARRIERE PLAN TECHNOLOGIQUE DE L'INVENTION

En laboratoire, les prélèvements tissulaires sont effectués sur des blocs histologiques. Sur un bloc se trouve du tissu pathologique, du tissu sain, et éventuellement du tissu nécrosé. Il est donc nécessaire d'identifier précisément la zone à prélever sur le bloc. Pour cela, un opérateur découpe une tranche de bloc sur une épaisseur de 3 microns environ au moyen d'un microtome, puis transfère ladite tranche sur une lame de verre. La lame est alors chauffée pendant une heure environ à 60° environ, puis colorée par coloration HES. L'opérateur regarde alors la coupe au microscope, et repère le tissu pathologique grâce à la coloration. L'emplacement des tissus repéré au microscope est identique à l'emplacement des tissus sur le bloc histologique, ce qui permet à l'opérateur de savoir précisément quelle zone prélever sur le bloc. Après prélèvement, les échantillons sont traités à l'aide de réactifs, selon des protocoles de traitement.

Une méthode de prélèvement consiste à découper un carré de tissu sur le bloc au moyen d'un bistouri, puis de le transférer dans un cryo-tube. Cette manipulation comporte des risques élevés de pollution micro-biologique du carré prélevé ainsi que des risques importants de blessure. De plus, une telle découpe par bistouri manque de précision et n'est pas ergonomique pour l'opérateur. Elle présente par ailleurs l'inconvénient de ne pas permettre l'obtention d'échantillons de taille identique, ce qui nécessite de doser pour chaque échantillon la quantité de réactif à utiliser lors de l'étape de traitement.

Le document US 6 652 807, considéré comme représentant l'étât de l'art le plus proche, décrit le préambule de la revendication 1.

### DESCRIPTION GENERALE DE L'INVENTION

L'objet de l'invention propose un dispositif de prélèvement d'un échantillon de matière sur un bloc de ladite matière, ledit dispositif assurant un prélèvement précis, ergonomique et sécuritaire d'un échantillon de taille standardisée, en limitant les risques de contamination micro-biologique de l'échantillon prélevé.

A cet effet, l'invention a pour objet un dispositif de prélèvement d'un échantillon de matière sur un bloc de ladite matière, le dispositif comportant :
- un emporte-pièce apte à découper l'échantillon dans le bloc de matière ;
- un tube de récupération comportant :
   ▪ une extrémité proximale ;
   ▪ une extrémité distale fermée ;
- une base comportant une pièce apte à être introduite dans ledit emporte-pièce de sorte que l'échantillon découpé par ledit emporte-pièce est expulsé dans ledit tube de récupération lorsque ladite pièce est introduite dans ledit emporte-pièce.

L'invention est remarquable, dans son acceptation la plus large, en ce que le dispositif comprend en outre :
- des moyens aptes à assurer le maintien entre ledit emporte-pièce et ladite extrémité proximale, lesdits moyens aptes à assurer le maintien entre ledit emporte-pièce et ladite extrémité proximale du tube de récupération étant des moyens de liaison réversible,
- des moyens aptes à assurer le maintien entre ledit emporte-pièce et ladite base de sorte que l'emporte-pièce reste solidaire de ladite base lorsque ledit emporte-pièce et ladite extrémité proximale dudit tube de récupération sont désolidarisés.

Grâce à l'invention, l'échantillon est découpé précisément et est de taille standardisée. En effet, l'opérateur utilisant le dispositif peut choisir une taille d'emporte pièce correspondant à la taille voulue de l'échantillon, et positionner l'emporte-pièce précisément au niveau de la zone à prélever sur le bloc. Grâce à la standardisation des échantillons, le temps de traitement des échantillons est optimisé. De plus, l'échantillon est initialement contenu dans l'emporte pièce puis transféré directement de l'emporte pièce vers le tube de récupération sans être exposé à l'air libre : les risques de contamination micro-biologique sont donc limités. Par ailleurs, le dispositif est ergonomique car il permet une découpe aisée à l'aide de l'emporte-pièce, par simple pression.

Outre les caractéristiques qui viennent d'être évoquées dans le paragraphe précédent, le dispositif selon l'invention peut présenter une ou plusieurs caractéristiques complémentaires parmi les suivantes, considérées individuellement ou selon toutes les combinaisons techniquement possibles :
- la matière de l'échantillon est une matière de type biologique.
- les moyens de maintien de l'emporte pièce à la base sont une gorge périphérique pratiquée sur la base et une partie saillante de l'emporte-pièce, telle que la partie saillante est apte à se verrouiller dans la gorge.
- le dispositif comporte des moyens de liaison réversible entre le tube de récupération et la base.
- les moyens de liaison réversible entre le tube de récupération et la base sont un premier filetage pratiqué sur la base et un deuxième filetage pratiqué sur le tube de récupération.
- l'emporte pièce comporte une partie creuse traversante, débouchant à l'intérieur du tube de récupération lorsque l'emporte-pièce est maintenu sur l'extrémité proximale du tube de récupération.
- la partie creuse est dimensionnée à la taille de l'échantillon de matière voulu.
- le diamètre de la partie creuse est compris entre 0,5mm et 2mm.
- la pièce de la base apte à être introduite dans l'emporte-pièce est un mandrin dont la forme est complémentaire à la partie creuse de l'emporte-pièce.
- la pièce de la base apte à être introduite dans l'emporte-pièce est de forme cylindrique.
- le dispositif comporte une poignée apte se fixer sur le tube de récupération, ladite poignée facilitant le guidage du dispositif lors de la découpe de l'échantillon.
- l'emporte pièce, la base et le tube de récupération sont en plastique.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention. Les figures montrent :
- à la figure 1, une représentation schématique d'un dispositif de prélèvement de tissu sur bloc histologique, selon un mode de réalisation de l'invention ;
- à la figure 2, une représentation schématique d'un emporte-pièce du dispositif de la figure 1 ;
- à la figure 3, une représentation schématique d'une partie de l'emporte-pièce de la figure 2 ;
- à la figure 4, une représentation schématique d'une poignée susceptible d'être utilisée dans le dispositif de la figure 1 ;
- aux figures 5 à 7, des représentations schématiques des étapes de réalisation d'un procédé de prélèvement d'un échantillon de matière biologique sur bloc de ladite matière, au moyen du dispositif de la figure 1.

### DESCRIPTION DETAILLEE D'AU MOINS UN MODE DE REALISATION DE L'INVENTION

Sauf précision contraire, un même élément apparaissant sur des figures différentes présente une référence unique.

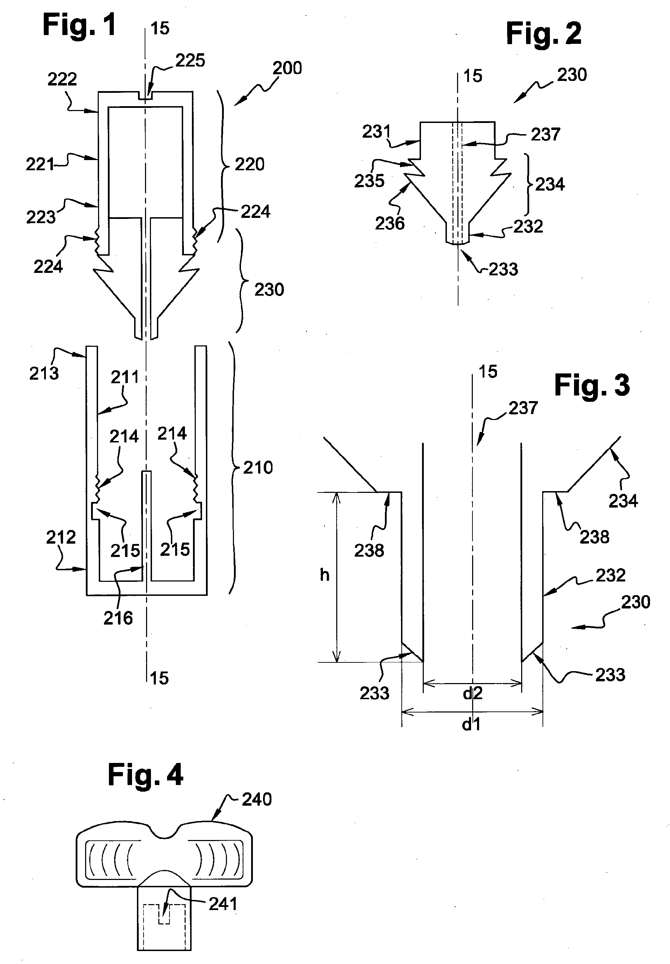

La figure 1 représente un dispositif 200 de prélèvement d'un échantillon de matière biologique sur bloc de ladite matière, selon un mode de réalisation de l'invention. Le dispositif 200 comporte notamment :
- une base 210 ;
- un tube de récupération 220 ;
- un emporte pièce 230.

La base 210 est de forme cylindrique, et s'étend selon un axe de symétrie 15. La base 210 comporte notamment :
- une paroi interne 211 ;
- une partie inférieure 212 dont l'extrémité est fermée ;
- une partie supérieure 213 dont l'extrémité est ouverte.

Une première section de la paroi interne 211 de la base 210 comporte un premier filetage 214 périphérique. Une deuxième section adjacente à la première section, et située du côté de la partie inférieure 212 de la base 210, comporte une gorge 215 périphérique. La partie inférieure 212 de la base 210 comporte un mandrin 216, de forme cylindrique, s'étendant selon l'axe 15 vers la partie supérieure 213 de la base 210.

Le tube de récupération 220 est de forme cylindrique, et s'étend selon l'axe 15. Le tube de récupération 220 comporte notamment :
- une paroi externe 221
- une partie supérieure 222 dont l'extrémité est fermée
- une partie inférieure 223 dont l'extrémité est ouverte

Une section de la paroi externe 221 du tube de récupération 220 située à l'extrémité de la partie inférieure 223, comporte un deuxième filetage 224. Par ailleurs, l'extrémité fermée de la partie supérieure 222 comporte une rainure 225.

L'emporte pièce 230 est représenté en détails à la figure 2. Il comporte :
- une partie supérieure cylindrique 231 ;
- une partie inférieure cylindrique 232 ;
- une partie intermédiaire 234 comportant une première partie saillante 235 et une deuxième partie saillante 236 ;
- une partie creuse 237 cylindrique, dont la forme est complémentaire à la forme du mandrin 216, qui traverse l'emporte pièce 230 selon l'axe 15. La partie creuse 237 a pour diamètre d2.

La partie inférieure 232 est représentée en détails à la figure 3. Elle a pour hauteur h, et pour diamètre externe d1. De plus, la partie inférieure 232 comporte une extrémité 233 biseautée et tranchante. Par ailleurs, l'emporte-pièce 230 comporte une partie coudée 238 périphérique, située à l'interface entre la partie inférieure 232 et la partie intermédiaire 234. La partie coudée 238 s'étend selon un plan orthogonal à l'axe 15.

L'emporte pièce 230 est apte à prendre deux positions :
- une position initiale, dans laquelle l'emporte pièce 230 est fixé à la partie inférieure 223 du tube de récupération 220. Dans la position initiale, l'emporte pièce 230 est apte à se fixer au tube de récupération 220 par emboitement de la partie supérieure cylindrique 231 dans la partie inférieure 231 du tube de récupération 200. La première partie saillante 235 de l'emporte pièce 230 fait office de butée pour stopper l'emboitement. Cette position initiale est représentée à la figure 1.
- une position finale, dans laquelle l'emporte pièce 230 est fixé à la base 210. Dans la position finale, l'emporte pièce 230 est apte à se fixer à la base 210 par emboitement et verrouillage de la deuxième partie saillante 236 dans la gorge 215 de la base 210.

Le passage de la position initiale à la position finale nécessite un coulissement du mandrin 216 dans la partie creuse 237 de l'emporte pièce 230, et un vissage du tube de récupération 220 à la base 210 via les filetages 214 et 224.

Dans un mode de réalisation de l'invention, le dispositif 200 comporte une poignée 240, représentée à la figure 4. La poignée 240 est apte à se fixer sur le tube de récupération 220 via un tenon 241 apte à être introduit en force dans la rainure 225 du tube de récupération.

Le dispositif 200 peut être présenté sous la forme d'un kit de prélèvement contenu dans un emballage stérile comportant :
- une base 210 ;
- un tube de récupération 220 ;
- un emporte pièce 230 ;
- une lingette de nettoyage imprégnée d'un décontaminant ;
- une poignée 240.

Le kit de prélèvement étant stérile, les problèmes de contamination micro-biologique sont limités.

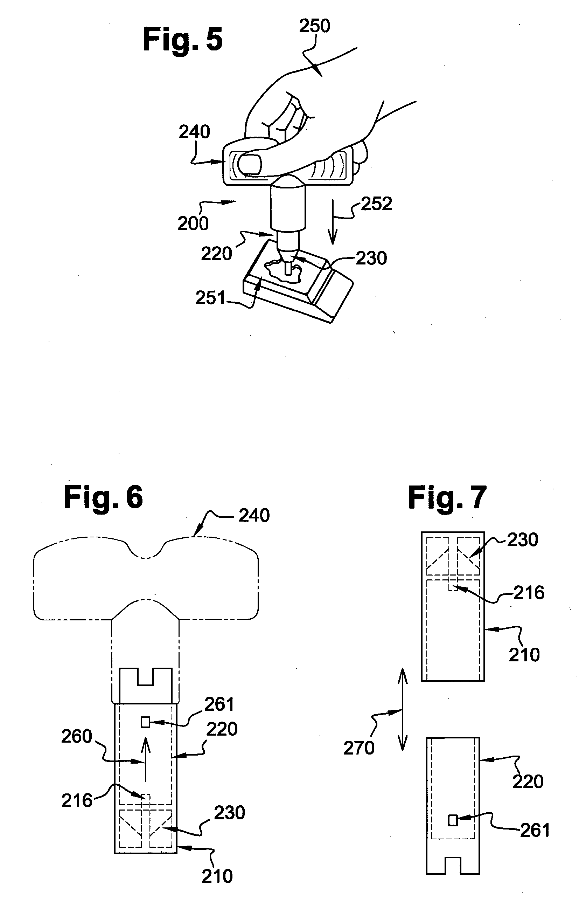

Les étapes de prélèvement d'un échantillon de matière biologique sur un bloc de ladite matière 251 par un opérateur 250 sont les suivantes :
- l'opérateur repère sur une lame de type HES (ou dans un autre exemple de type HE) ou sur une coupe virtuelle la zone du bloc 251 à prélever ;
- l'opérateur ouvre l'emballage stérile du kit de prélèvement et utilise la lingette pour nettoyer la surface du bloc à prélever ;
- l'opérateur 250 met des gants stériles puis fixe l'emporte-pièce 230 au tube de récupération 220 (l'emporte-pièce est alors en position initiale), et fixe la poignée 240 au tube de récupération 220 ;
- l'opérateur 250 positionne l'ensemble tube de récupération 220/emporte pièce 230/poignée 240 au dessus du bloc de matière biologique 251, comme représenté à la figure 5 ;
- par pression dans le sens de la flèche 252, c'est-à-dire parallèlement à la surface du bloc 251 et suivant l'axe 15, la partie inférieure 232 de l'emporte pièce 230 pénètre et s'enfonce dans le bloc 251, grâce à l'extrémité tranchante 233 de l'emporte pièce 230. On note que la poignée 240 aide l'opérateur à guider le dispositif 200 lors de cette étape.
- simultanément à la pénétration de la partie inférieure 232 de l'emporte pièce 230 dans le bloc 251, un échantillon de matière biologique 261 (représenté aux figures 6 et 7) est découpé et poussé dans la partie creuse 237 de l'emporte pièce 230. Un carottage est ainsi effectué.
- La partie coudée 238 de l'emporte-pièce 230 fait office de butée pour limiter l'enfoncement de l'emporte-pièce 230 dans le bloc 251. Ainsi, seule la partie inférieure 232 pénètre dans le bloc. Lorsque la partie inférieure 232 est complètement enfoncée dans le bloc de matière biologique 251, l'opérateur 250 retire l'ensemble tube de récupération 220/emporte pièce 230 du bloc 251.
- l'opérateur 250 introduit alors l'ensemble tube de récupération 220/emporte pièce 230 dans la base 210. L'opérateur visse le tube de récupération 220 à la base 210 via les filetages 214 et 224, jusqu'à ce que l'emporte-pièce 230 se retrouve en position finale. Lors de l'introduction de l'ensemble tube de récupération 220/emporte pièce 230 dans la base 210, le mandrin 216 s'insère dans la partie creuse 237, ce qui expulse la carotte, c'est-à-dire l'échantillon 261, dans le tube de récupération 220. Cette étape est représentée à la figure 6. Dans cette configuration, l'échantillon 261 est retenu dans le tube de récupération, par l'ensemble emporte pièce 230/base 210 qui fait office de bouchon. Le dispositif 200 renfermant l'échantillon 261 est alors transportable sans risque de contamination micro-biologique.
- L'opérateur récupère l'échantillon 261 par désolidarisation du tube de récupération 220 de l'ensemble base 210/emporte pièce 230, en dévissant le tube de récupération 220 de la base 210 via les filetages 214 et 224. La base 210 reste solidaire de l'emporte pièce 230 grâce aux moyens de verrouillage 215 et 236. Cette étape est représentée à la figure 7.

Avantageusement, l'emporte pièce présente les dimensions suivantes :
- la hauteur h de la partie inférieure 232 de l'emporte pièce 230 est de 2 millimètres ;
- le diamètre de la partie inférieure 232 de l'emporte pièce 230 est de 2 millimètres ;
- le diamètre de la partie creuse 237 de l'emporte pièce 230 est de 1 millimètre.

Avec de telles dimensions, la carotte 261 a un volume de 2 millimètres cube, ce qui est un volume optimum permettant un temps de digestion enzymatique raisonnable lors de l'étape de traitement.

Le dispositif 200 étant préférentiellement à usage unique, il est avantageusement en plastique.

Bien entendu, l'invention n'est pas limitée au mode de réalisation décrit en référence aux figures 1 à 7, et des variantes pourraient être envisagées sans sortie du cadre de l'invention. Par exemple, d'autres formes de mandrin 216 et partie creuse 237 pourraient être envisagées, selon la forme de l'échantillon voulue. A la place de respectivement une gorge 215 périphérique dans la base 210 et une deuxième partie saillante 236 de l'emporte pièce 230, on peut envisager des encoches et plusieurs parties saillantes aptes à se verrouiller dans les encoches.

Il convient par ailleurs de noter que le dispositif de prélèvement d'un échantillon de matière a été plus particulièrement décrit dans le cas d'un prélèvement d'un échantillon de matière de type biologique. Il est entendu que le dispositif selon l'invention n'est aucunement limité à de tels échantillons et peut être utilisé pour le prélèvement d'échantillon de matière de type alimentaire ou encore de type végétal.

Dans le cas d'un échantillon de type alimentaire, le dispositif permet par exemple d'effectuer un prélèvement d'un échantillon de matière en vue d'une analyse ayant pour objet de vérifier la conformité de l'aliment aux limites maximales de résidus, par exemple de pesticides.

En outre, le dispositif selon l'invention peut être congelé de façon à préserver l'échantillon prélevé. Cette pratique peut être utilisée notamment dans le cadre des prélèvements d'échantillon alimentaire de façon à assurer la traçabilité d'un aliment.

En outre, le dispositif selon l'invention peut être utilisé pour prélever du matériel ADN, pour tracer par exemple des aliments transgéniques.

## Revendications

1. Dispositif (200) de prélèvement d'un échantillon (261) de matière sur un bloc (251) de ladite matière, le dispositif (200) comportant :
- un emporte-pièce (230) apte à découper l'échantillon (261) dans le bloc (251) de matière ;
- un tube de récupération (220) comportant :
▪ une extrémité proximale ;
▪ une extrémité distale fermée ;
- une base (210) comportant une pièce (216) apte à être introduite dans ledit emporte-pièce (230) de sorte que l'échantillon (261) découpé par ledit emporte-pièce (230) est expulsé dans ledit tube de récupération (220) lorsque ladite pièce (216) est introduite dans ledit emporte-pièce (230) ;
ledit dispositif (200) comportant en outre :
- des moyens (231, 235) aptes à assurer le maintien entre ledit emporte-pièce (230) et ladite extrémité proximale, **caractérisé en ce que** lesdits moyens (231, 235) aptes à assurer le maintien entre ledit emporte-pièce (230) et ladite extrémité proximale du tube de récupération (220) sont des moyens de liaison réversible, et
- des moyens (215, 236) aptes à assurer le maintien entre ledit emporte-pièce (230) et ladite base (210) de sorte que l'emporte-pièce (230) reste solidaire de ladite base (210) lorsque ledit emporte-pièce (230) et ladite extrémité proximale dudit tube de récupération (220) sont désolidarisés.

2. Dispositif (200) selon la revendication précédente **caractérisé en ce que** l'échantillon de matière est un échantillon de matière biologique.

3. Dispositif (200) selon l'une des revendications précédentes, **caractérisé en ce que** les moyens (215, 236) de maintien de l'emporte pièce (230) à la base (210) sont une gorge périphérique (215) pratiquée sur la base (210) et une partie saillante (236) de l'emporte-pièce (235), telle que la partie saillante (236) est aptes à se verrouiller dans la gorge (215).

4. Dispositif (200) selon l'une des revendications précédentes, **caractérisé en ce que** le dispositif (200) comporte des moyens de liaison (214, 224) réversible entre le tube de récupération (220) et la base (210).

5. Dispositif (200) selon la revendication précédente, **caractérisé en ce que** les moyens de liaison (214, 224) réversible entre le tube de récupération (220) et la base (210) sont des moyens de type vis/écrou.

6. Dispositif (200) selon l'une des revendications précédentes, **caractérisé en ce que** l'emporte pièce (230) comporte une partie creuse (237) traversante, débouchant à l'intérieur du tube de récupération (220) lorsque l'emporte-pièce (230) est maintenu sur l'extrémité proximale du tube de récupération (220).

7. Dispositif (200) selon la revendication précédente, **caractérisé en ce que** la partie creuse (237) est dimensionnée à la taille de l'échantillon (261) de matière voulu.

8. Dispositif (200) selon l'une des revendications 6 ou 7, **caractérisé en ce que** la pièce (216) de la base (210) apte à être introduite dans l'emporte-pièce (230) est un mandrin (216) dont la forme est complémentaire à la partie creuse (237) de l'emporte-pièce (230).

9. Dispositif selon l'une des revendications précédentes, **caractérisé en ce que** la pièce (216) de la base (210) apte à être introduite dans l'emporte-pièce (230) est de forme cylindrique.

10. Dispositif (200) selon l'une des revendications précédentes, **caractérisé en ce que** le dispositif (200) comporte une poignée (240) apte se fixer sur le tube de récupération (220), ladite poignée (240) facilitant le guidage du dispositif (200) lors de la découpe de l'échantillon (261).

## Patentansprüche

1. Vorrichtung (200) zur Entnahme einer Probe (261) eines Materials auf einem Block (251) des genannten Materials, wobei die Vorrichtung (200) umfasst:
- ein Locheisen (230), das geeignet ist, die Probe (21) in dem Materialblock (251) auszuschneiden;
- eine Auffangröhre (220), umfassend:
▪ ein proximales Ende;
▪ ein geschlossenes distales Ende;
- eine Basis (210), umfassend ein Stück (216), das geeignet ist, in das genannte Locheisen (230) derart eingefügt zu werden, dass die von dem genannten Locheisen (230) ausgeschnittene Probe (230) in die genannte Auffangröhre (220) ausgestoßen wird, wenn das Stück (216) in das genannte Locheisen (230) eingefügt wird;
wobei die genannte Vorrichtung (200) darüber hinaus umfasst:
- Mittel (231, 235), die geeignet sind, das Festhalten zwischen dem genannten Locheisen (230) und dem genannten proximalen Ende zu gewährleisten, **dadurch gekennzeichnet, dass** die genannten Mittel (231, 235), die geeignet sind, das Festhalten zwischen dem genannten Locheisen (230) und dem genannten proximalen Ende der Auffangröhre (220) zu gewährleisten, reversible Verbindungsmittel sind,
- Mittel (215, 236), die geeignet sind, das Festhalten zwischen dem genannten Locheisen (230) und der genannten Basis (210) derart zu gewährleisten, dass das Locheisen (230) mit der genannten Basis (210) fest verbunden bleibt, wenn das genannte Locheisen (230) und das genannte proximale Ende der genannten Auffangröhre (220) voneinander gelöst sind.

2. Vorrichtung (200) gemäß dem voranstehenden Anspruch, **dadurch gekennzeichnet, dass** die Probe aus Material eine Probe aus biologischem Material ist.

3. Vorrichtung (200) gemäß einem der voranstehenden Ansprüche, **dadurch gekennzeichnet, dass** die Festhaltemittel (215, 236) des Locheisens (230) an der Basis (210) eine umlaufende Auskehlung (215) sind, die auf der Basis (210) und einem hervorstehenden Teil (236) des Locheisens (235) derart praktiziert sind, dass der hervorstehende Teil (236) geeignet ist, sich in der Auskehlung (215) zu verriegeln.

4. Vorrichtung (200) gemäß einem der voranstehenden Ansprüche, **dadurch gekennzeichnet, dass** die Vorrichtung (200) reversible Verbindungsmittel (214, 224) zwischen der Auffangröhre (220) und der Basis (210) umfasst.

5. Vorrichtung (200) gemäß dem voranstehenden Anspruch, **dadurch gekennzeichnet, dass** die reversiblen Verbindungsmittel (214, 224) zwischen der Auffangröhre (220) und der Basis (210) Mittel vom Typ / Mutter sind.

6. Vorrichtung (200) gemäß einem der voranstehenden Ansprüche, **dadurch gekennzeichnet, dass** das Locheisen (230) einen durchquerenden, hohlen Teil (237) umfasst, der in das Innere der Auffangröhre (220) mündet, wenn das Locheisen (230) auf dem proximalen Ende der Auffangröhre (220) festgehalten ist.

7. Vorrichtung (200) gemäß dem voranstehenden Anspruch, **dadurch gekennzeichnet, dass** der hohle Teil (237) für die Größe der gewünschten Probe (261) aus Material ausgelegt ist.

8. Vorrichtung (200) gemäß Anspruch 6 oder 7, **dadurch gekennzeichnet, dass** das Stück (216) der Basis (210), das geeignet ist, in das Locheisen (230) eingefügt zu werden, ein Dorn (216) ist, dessen Form zum hohlen Teil (237) des Locheisens (230) komplementär ist.

9. Vorrichtung gemäß einem der voranstehenden Ansprüche, **dadurch gekennzeichnet, dass** das Teil (216) der Basis (210), das geeignet ist, in das Locheisen (230) eingefügt zu werden, eine zylindrische Form aufweist.

10. Vorrichtung gemäß einem der voranstehenden Ansprüche, **dadurch gekennzeichnet, dass** die Vorrichtung (200) einen Griff (240) umfasst, der geeignet ist, auf der Auffangröhre (220) befestigt zu werden, wobei der genannte Griff (240) die Führung der Vorrichtung (200) beim Ausschneiden der Probe (261) erleichtert.

## Claims

1. Device (200) for taking a sample (261) of material from a block (251) of said material, the device (200) comprising:
- a punch (230) for cutting the sample (261) from the material block (251);
- a collection tube (220) comprising:
▪ a proximal end;
▪ a closed distal end;
- a base (210) including a part (216) that will be inserted into said punch (230) such that the sample (261) cut out by said punch (230) is expelled into said collection tube (220) when said part (216) is inserted into said punch (230);
said device (200) also comprising:
- means (231, 235) for holding said punch (230) in contact with said proximal end, **characterised in that** said means (231, 235) for holding said punch (230) in contact with said proximal end of the collection tube (220) are reversible connection means, and
- means (215, 236) for holding said punch (230) in contact with said base (210) such that the punch (230) remains fixed to said base (210) when said punch (230) and said proximal end of said collection tube (220) are separated.

2. Device (200) according to the previous claim **characterised in that** the material sample is a sample of biological material.

3. Device (200) according to one of the previous claims, **characterised in that** the means (215, 236) of holding the punch (230) in contact with the base (210) are a peripheral groove (215) formed on the base (210) and a part (236) projecting from the punch (235), such that the projecting part (236) can become locked in the groove (215).

4. Device (200) according to one of the previous claims, **characterised in that** the device (200) comprises reversible connection means (214, 224) between the collection tube (220) and the base (210).

5. Device (200) according to the previous claim, **characterised in that** the reversible connection means (214, 224) between the collection tube (220) and the base (210) are screw/nut type means.

6. Device (200) according to one of the previous claims, **characterised in that** the punch (230) comprises a through hollow part (237) opening up inside the collection tube (220) when the punch (230) is held on the proximal end of the collection tube (220).

7. Device (200) according to the previous claim, **characterised in that** the dimensions of the hollow part (237) are adjusted to suit the size of the required material sample (261).

8. Device (200) according to either claim 6 or 7, **characterised in that** the part (216) of the base (210) that can be inserted into the punch (230) is a mandrel (216) with a shape complementary to the hollow part (237) of the punch (230).

9. Device according to one of the previous claims, **characterised in that** the part (216) of the base (210) that can be inserted into the punch (230) is cylindrical in shape.

10. Device (200) according to one of the previous claims, **characterised in that** the device (200) comprises a handle (240) that can be fixed onto the collection tube (220), said handle (240) facilitating guidance of the device (200) while the sample (261) is being cut.
